# EUROPEAN PATENT APPLICATION

(11) **EP 1 624 607 A1**
(43) Date of publication of application: **08.02.2006**
(21) Application number: 04732123.7
(22) Date of filing: 11.05.2004
(51) Int. Cl.: H04L 9/06

(54) **DES ALGORITHM-BASED ENCRYPTION METHOD**

(30) Priority: 13.05.2003 ES 200301104
(71) Applicant: Diseno de Sistemas en Silicio S.A., 46980 Paterna (Valencia) (ES)
(72) Inventor: BLASCO CLARET, Jorge, Vicente, E-46020 Valencia (ES); RIVEIRO INSUA, Juan Carlos, Puerta 43, E-46019 Valencia (ES); ESTEVE LLORET, Maria, E-46009 Valencia (ES)
(74) Representative: Ungria Lopez, Javier
(86) International application number: PCT/ES2004/000206
(87) International publication number: WO 2004/102869

(57) **Abstract**

Applicable in communications systems in the sending of data among user equipment of nodes connected to a network. It is **characterised in that** it comprises generating random keys (6) that are different for each packet, which are used for enciphering each packet by means of the DES enciphering algorithm, and the sending in the header of the packet of that random key (6), in turn enciphered (9) by means of a more secure algorithm than the DES algorithm, which permits improvement in the security of transmissions on a non-secure medium to which are connected the nodes and user equipment of a telecommunications system using the procedure of the invention instead of the DES enciphering algorithm.

## Description

### OBJECT OF THE INVENTION

As stated in the title of this specification, the present invention refers to a enciphering procedure based on the conventional DES (Data Encryption Standard) algorithm, which permits hardware enciphering of data packets sent among users or nodes connected to a network.

It is characterised by the random generation of keys for increasing the security of the system, enciphering each data packet with a new completely random key, which permits improvement in the security of transmissions on a non-secure medium between nodes or equipment of a telecommunications system using the procedure of the invention instead of the DES enciphering algorithm.

### BACKGROUND OF THE INVENTION

In the majority of telecommunications systems, a enciphering process needs to be carried out on the information as protection against the interception and/or modification of the data by persons outside of them.

Standing out among the cryptographic algorithms acknowledged as standard is the DES, used by the US government since 1977.

The DES (Data Encryption Standard) is a enciphering algorithm of 64-bit blocks or data packets, which are enciphered by means of a 56-bit key, for which permutation and substitution operations are used that are very easy to implement, both in hardware and in software. In turn, it is also a symmetric algorithm, since the same key is used for both the enciphering and deciphering of the data.

This algorithm is public and has been widely described in various articles and treatises on cryptography, becoming recognised as an international standard by the National Bureau of Standards on 15 January 1977, as we can see in the document FIBS PUB 46 published for that purpose.

Also known in the state of the art are other enciphering algorithms having greater protection and security capacity for the data, such as the TDES (Triple DES) or the AES (Advanced Encryption Standard) algorithms. The TripleDES (TDES) enciphering algorithm is a variant on the DES algorithm consisting of enciphering the information three times consecutively using the DES algorithm and with three different keys. On the other hand, the AES, Advanced Encryption Standard, algorithm uses keys of 128, 192 and up to 256 bits and provides a better combination of security and speed than the DES algorithm.

In order to decipher a enciphered message with any of these algorithms, an exhaustive test of keys has to be carried out. It is calculated that 2⁵⁶ are necessary for the standard DES, while with the TDES version, this figure becomes 2¹¹² attempts.

The advantage of the procedure of the invention is that, in a communications system using it, a security is achieved equivalent to that of an algorithm of greater protection capacity (such as TDES or AES) with a reduced complexity similar to that of DES. To achieve this, the creation of keys is done in a wholly random way, and the keys used are obliged to be different for each data packet transmitted and for each user. Thanks to this, and following the procedure of the invention, in order for an unauthorised interception to be able to decipher the message, it would be necessary to repeat the entire process of trial and error for each packet sent, and none of the information thus obtained could be used as an aid for deciphering the following packet, thereby protecting the system in a way that is secure and efficient.

### DESCRIPTION OF THE INVENTION

In order to achieve the objectives and avoid the drawbacks stated in the above sections, the invention consists of a enciphering procedure based on the DES algorithm which is applicable to communications systems where data packets are sent among equipment connected to a network. In transmission, the procedure is characterised in that random keys are generated on the basis of a real signal contaminated by white or coloured noise for each data packet to be enciphered by means of the DES algorithm. This packet is enciphered by means of the DES algorithm and the random key generated for the packet. Also, the random key is in turn enciphered by means of a enciphering algorithm with greater protection and security capacity compared to DES, and the result, namely, the enciphered key, is introduced into the header of the data packet to be sent.

In reception, the procedure is characterised in that the enciphered key is extracted from the header of the received packet, and said enciphered key is deciphered by means of the same enciphering algorithm with greater protection and security capacity compared to DES used in transmission. In this way, the random key obtained for the packet in transmission is again obtained. The received packet is then deciphered by means of the random key obtained, with which the original information that had to be sent is again obtained.

Moreover, the enciphering algorithm with greater protection and security capacity compared to DES in turn uses one or more different enciphering keys for each user, and those keys are random and different for each user in transmission and reception.

In order to be able to physically implement the procedure, provision is made so that the key or keys needed for enciphering the random key and generating enciphered key of the data packet are known by the transmitter and receiver and are stored in a variable capacity memory as a function of the number of pieces of user equipment. In the same way, the keys needed for deciphering the enciphered key in reception are also known in transmission and reception and are stored in a variable capacity memory as a function of the number of pieces of user equipment.

In this way, we succeed in improving the security of a system using this procedure instead of the DES algorithm, with a complexity similar to that of this method of enciphering in communications systems.

### BRIEF DESCRIPTION OF THE FIGURES

Figure 1.- Schematically represents the block diagram of a possible embodiment of an example for the implementation of the procedure of the invention for the transmission of enciphered data packets.
Figure 2.- Schematically represents the block diagram of a possible embodiment of an example for the implementation of the procedure of the invention for the reception of enciphered data packets.
Figure 3.- Represents a random key generator made up of a shift register and a random input signal, which can be used in an embodiment of the procedure of the invention for the generation of random keys.

### DESCRIPTION OF AN EMBODIMENT OF THE INVENTION

Given below is a description of an example of the invention, making reference to the numbering adopted in the figures.

As has been mentioned in the section on antecedents of the invention, the objective sought by the present invention consists of managing to increase the level of security of the DES algorithm so that it can become comparable to more complex enciphering systems, such as TripleDES (TDES) or advanced encryption standard (AES), but with a complexity similar to that of the DES algorithm.

In this example of embodiment, the TDES algorithm is used for enciphering the key used in the process of enciphering the data packet with DES. Said TDES algorithm needs three keys for performing the encryption.

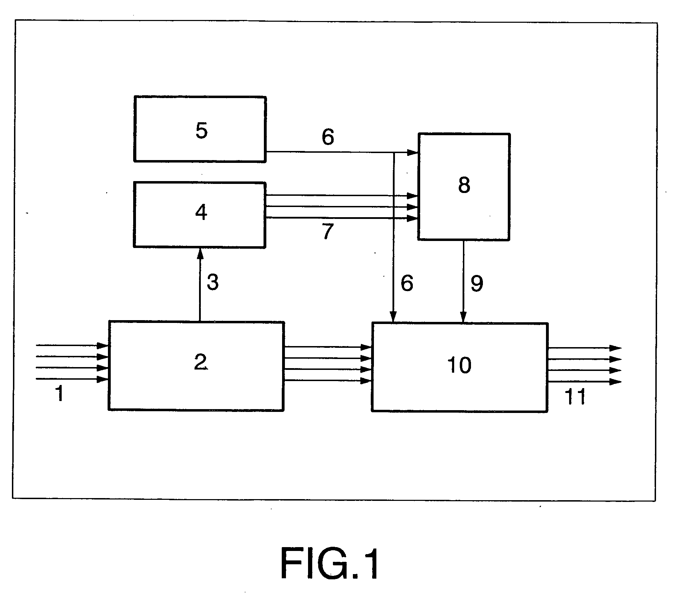

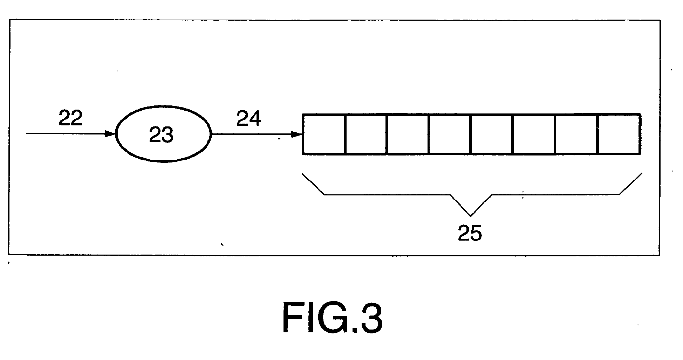

To achieve this, the communications system using the procedure of the invention uses a random generator (5) (figure 1) of keys, the arrangement of which appears in figure 3 and is made up of a shift register (25) with the width of bits needed for generating the key, which are 64 bits in the DES algorithm. The input (24) to that shift register consists of a bit of a signal (22) contaminated by white or coloured noise, which is what usually contaminates signals transmitted via a real communications channel. Due to being contaminated by noise, this signal (22), once its value has been quantified in binary using, for example, an analog-digital converter (23), has its lowest bits completely random, in such a way that if, at each clock cycle, we take one of those bits as input and we shift the content of the register, following a number of cycles equal to the width of the shift register we will have all the bits of the register random and the value of that register can be used as a random key (6) for enciphering the actual data packet to be sent, as will be described further below. This process of key generation is repeated for each data packet transmitted, with all the keys (6) generated being wholly random and independent of each other.

Figure 1 shows a block diagram of an example of the general functioning of the elements implementing the procedure of the invention for transmission within a communications system.

In transmission, the incoming data packet (1) is analysed in a control module (2) in order to obtain from its header the corresponding information on the user (3) to which it is being sent. Once the recipient is known, three keys (7) corresponding to that recipient are extracted from a memory (4) .

These three keys (7) will be used for the application of the TripleDES algorithm (8), which the invention uses for enciphering the random key (6) created by the random generator (5). Moreover, these three keys were in turn also generated in a random manner for each user. In this way, a enciphered key (9) is obtained.

With the random key (6), prior to its enciphering, the data of the packet is enciphered in the module (10) by means of the DES algorithm, obtaining the data packet (11) now enciphered for its sending. In order to decode the packet in reception, it would be necessary to send the random key (6), but instead the module (10), after enciphering the data, introduces the enciphered key (9) in the header of the packet (11). In this way, it will be necessary to decipher the enciphered key in order to be able to decipher the packet in reception.

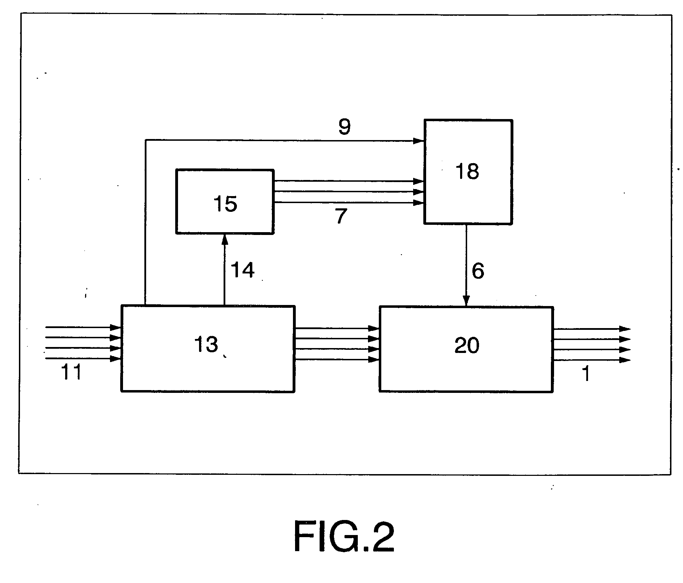

Figure 2 shows a block diagram of an example of the general functioning of the elements implementing the procedure of the invention for reception within a communications system.

In reception, the process is the reverse, though due to the symmetry of the DES and TripleDES algorithms, a scheme can be used similar to the one described above for transmission.

In this case, the control module (13) obtains from the incoming data packet (12) the information on the user (14) which that packet has transmitted and the enciphered key (9). This enciphered key (9) is the random key (6) per packet but which was enciphered with TDES in transmission with three keys (7) which the receiving user knows.

The enciphered key (9) is deciphered in the module (18) by means of the TripleDES algorithm and three keys (7). These three keys are extracted from a memory (15) indexing in that memory with the information on the transmitter user (14). When the enciphered key (9) is deciphered, we obtain a key (6) used for enciphering the data in transmission.

Once that key (6) has been deciphered, the data is deciphered in the module (20) by means of the DES algorithm and the original data (1) is successfully obtained.

## Claims

1. **DES ALGORITHM-BASED ENCRYPTION METHOD**, applicable to communications systems where data packets are sent among equipment connected to a network, **characterised in that** in transmission it comprises:
- generating random keys (6) on a basis of a real signal contaminated by noise selected from between white and coloured noise for each data packet to be enciphered by means of the DES algorithm;
- enciphering the data packet by means of the DES algorithm and the random key (6) generated for the data packet;
- enciphering the random key (6) by means of an enciphering algorithm with greater protection and security capacity compared to DES (8); and
- introducing an enciphered key (9) into a header of the data packet to send.

2. **DES ALGORITHM-BASED ENCRYPTION METHOD,** according to claim 1, **characterised in that** in reception it comprises:
- extracting the enciphered random key (9) from the header of the packet received;
- deciphering the enciphered random key (9) means of the same enciphering algorithm with greater protection and security capacity compared to DES (18) used in transmission in order to obtain the random key (6); and
- deciphering the received packet by means of the random key obtained (6).

3. **DES ALGORITHM-BASED ENCRYPTION METHOD**, according to claim 1 or 2, **characterised in that** the enciphering algorithm with greater protection and security capacity compared to DES uses in turn at least one different enciphering key (7) for each user.

4. **DES ALGORITHM-BASED ENCRYPTION METHOD**, according to claim 3, **characterised in that** the at least one enciphering key (7) needed for applying a more secure enciphering algorithm on the data key are random and different for each user in transmission and reception.

5. **DES ALGORITHM-BASED ENCRYPTION METHOD**, according to claim 1, **characterised in that** the at least one key (7) needed for enciphering the random key (6) and generating the enciphered key (9) of the data packet are known by the transmitter and receiver and are stored in transmission in a variable capacity memory (4) as a function of number of pieces of user equipment.

6. **DES ALGORITHM-BASED ENCRYPTION METHOD**, according to claim 2 or 3, **characterised in that** the at least one key (7) needed for deciphering the random key (9) and generating the deciphered key (6) of the data packet are known by the transmitter and receiver and are stored in reception in a variable capacity memory (15) as a function of the number of pieces of user equipment.
